# EUROPÄISCHE PATENTANMELDUNG

(11) **EP 2 148 408 A1**
(43) Veröffentlichungstag der Anmeldung: **27.01.2010**
(21) Anmeldenummer: 09165911.0
(22) Anmeldetag: 20.07.2009
(51) Int. Cl.: H02K 1/28, H02K 1/32, H02K 19/16

(54) **Synchronmaschine sowie Verfahren zum Herstellen einer solchen Synchronmaschine**

(30) Priorität: 24.07.2008 CH 11542008
(71) Anmelder: Alstom Technology Ltd, 5400 Baden (CH)
(72) Erfinder: Arend, Peter Ulrich, 79618 Rheinfelden (DE); Rajput, Nagib, 5430 Wettingen (CH)

(57) **Zusammenfassung**

Eine Synchronmaschine (10), insbesondere Turbogenerator, umfasst einen um eine Rotorachse drehbaren Rotor (12), welcher unter Ausbildung eines Luftspaltes (26) konzentrisch von einem Stator (11) umgeben und mit einem Rotor-Dämpfersystem (14) ausgestattet ist.

Bei einer solchen Synchronmaschine werden die Dämpferverluste dadurch erheblich reduziert, dass im Luftspalt (26) Mittel (15) zur Beeinflussung des Statormagnetfeldes (13) angeordnet sind.

## Beschreibung

### TECHNISCHES GEBIET

Die vorliegende Erfindung bezieht sich auf das Gebiet der rotierenden elektrischen Maschinen. Sie betrifft eine Synchronmaschine gemäss dem Oberbegriff des Anspruchs 1 sowie ein Verfahren zum Herstellen einer solchen Synchronmaschine.

### STAND DER TECHNIK

Synchronmaschinen im allgemeinen und Turbogeneratoren im speziellen sind standardmässig mit einem Rotor-Dämpfer-System ausgestattet (siehe z.B. Fig. 6 in L. Busse; K.-H. Soyk ,,World's highest capacity steam turbosets for the lignitefired Lippendorf power station", ABB Review 6/1997, S. 13-22). Dieses Dämpfersystem ist stromführend
- bei instationären Betriebsfällen (Drehschwingungen, Drehzahländerungen, Schalthandlungen und Störungen (wie z.B. Stosskurzschlüssen)),
- bei räumlichen bzw. zeitlichen Magnetfeld-Oberwellen (wie sie beispielsweise bei Wicklungsschlüssen oder Stromrichterbetrieb vorkommen),
- bei unsymmetrischem Betrieb (z.B. Schieflast, interne Störfälle (z.B. Wicklungsschluss), und externe Störfälle (z.B. Ausfall von Stromrichterventilen, einphasiger Kurzschluss)).

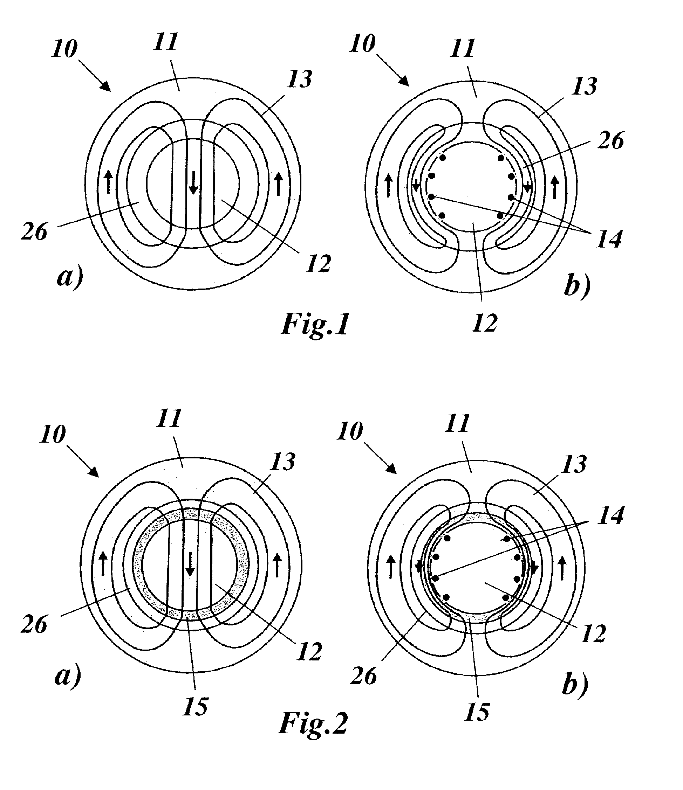

Die bei diesen Betriebs- bzw. Störfällen auftretenden Dämpferströme wirken der vom Stator in den Rotor eindringenden Magnetfeldänderung entgegen. Dadurch wird die Feldzunahme im Rotorinnern stark vermindert. Die tangentiale Magnetfeldstärke im Luftspalt (zwischen Stator und Rotor) nimmt jedoch stark zu. Diese Situation ist in Fig. 1 stark vereinfacht dargestellt: Die Synchronmaschine 10 (z.B. ein Turbogenerator) umfasst einen zentralen Rotor 12, der konzentrisch von einem Stator 11 umschlossen ist. Zwischen beiden befindet sich ein ringförmiger Luftspalt 26. Im stationären Betriebsfall (linke Teilfigur 1(a)) bei symmetrischer Speisung ohne Oberwellen geht das Statormagnetfeld 13 grösstenteils durch den Rotor 12 hindurch.

Bei anderen Betriebs- bzw. Störfällen, bei denen im Rotor 12 Dämpferströme 14 wirksam sind (rechte Teilfigur 1(b)), wird die sich aus Rotorsicht zeitlich ändernde Magnetfeldkomponente aus dem Rotorinnern herausgedrängt und hat im Luftspalt 26 eine starke tangentiale Komponente.

Die induzierten Dämpferströme 14, die in Fig. 1(b) auf der rechten Seite des Rotors 12 in die Zeichenebene hinein und auf der linken Seite aus der Zeichenebene heraus fliessen, sind mit elektrischen Verlusten verknüpft, die zusätzlich aus der Synchronmaschine 10 abgeführt werden müssen. Es ist insbesondere bei dauerhaft anstehenden Oberwellen und/oder Unsymmetrie wünschenswert, diese Verluste auf einfache Weise zu verringern, ohne die elektromechanische Leistungswandlung der Synchronmaschine anderweitig zu beeinträchtigen.

### DARSTELLUNG DER ERFINDUNG

Es ist daher Aufgabe der Erfindung, eine Synchronmaschine mit einem Dämpfersystem zu schaffen, welche sich aufgrund einfacher konstruktiver Änderungen durch deutlich verringerte Dämpferverluste auszeichnet, sowie ein Verfahren zu seiner Herstellung anzugeben.

Die Aufgabe wird durch die Gesamtheit der Merkmale der Ansprüche 1 und 13 gelöst. Wesentlich für die erfindungsgemässe Lösung ist, dass im Luftspalt Mittel zur Beeinflussung des Statormagnetfeldes angeordnet sind.

Gemäss einer bevorzugten Ausgestaltung der Erfindung umfassen die Mittel zur Beeinflussung des Statormagnetfeldes einen magnetisierbaren Mantel, der die vom Arbeitsgrundfeld der Maschine durchsetzte Oberfläche des Rotors zumindest teilweise bedeckt. Der magnetisierbare Mantel vermindert den magnetischen Widerstand quer zum Luftspalt (also in tangentialer Richtung). Wenn bei bestimmten Betriebs- bzw. Störfällen Dämpferströme im Rotor entstehen, die das Statormagnetfeld quer zum Luftspalt (tangential) umlenken, durchdringt der vom Stator eingeprägte magnetische Fluss dann den magnetisierbaren Mantel. Der notwendige Magnetisierungsstrom (= MMK = magnetomotorische Kraft = magnetische Spannung in tangentialer Richtung) ist dann aufgrund des Mantels kleiner als bei herkömmlicher Bauart ohne Mantel. Der notwendige Dämpferstrom ist daher kleiner. Weil die elektrischen Verluste im Quadrat mit der Stromstärke einhergehen, ergibt sich eine überproportionale Minderung der Verluste im Rotor-Dämpfer.

Vorzugsweise umschliesst der magnetisierbare Mantel den Rotor in Form eines oder mehrerer magnetisierbarer Ringe.

Insbesondere umfassen die magnetisierbaren Ringe jeweils in konzentrischer Anordnung unmittelbar aneinander grenzend einen Innenring und einen Aussenring, wobei der Innenring magnetisierbares Material enthält, und der Aussenring zur Sicherung des Innenrings gegen die beim drehenden Rotor auftretenden Fliehkräfte ausgebildet ist.

Vorteilhaft ist, wenn der Aussenring aus einem faserverstärkten Verbundwerkstoff besteht, insbesondere, wenn der Aussenring zur Faserverstärkung Kohlefasern enthält, und die Kohlefasern in Umfangsrichtung orientiert sind.

Vorteilhaft ist weiterhin, wenn der Innenring aus gesintertem Material, insbesondere aus sogenanntem "Composite-Shield"-Material, besteht.

Das erfindungsgemässe Verfahren zum Herstellen der Synchronmaschine ist **dadurch gekennzeichnet, dass** in einem ersten Schritt der oder die Ringe hergestellt werden, und dass in einem zweiten Schritt die fertigen Ringe über den Rotor geschoben werden. Die Kappenringe, die als Fliehkraft-Sicherung für die Rotorwickelköpfe in üblicher Weise eingesetzt werden, werden zuletzt aufgezogen.

Eine Ausgestaltung des erfindungsgemässen Verfahrens zeichnet sich dadurch aus, dass bei der Herstellung eines Rings zunächst in einem ersten Teilschritt ein Innenring aus magnetisierbarem Material, insbesondere durch Sintern eines sogenannten "Composite-Shield"-Materials, hergestellt wird, und dass in einem zweiten Teilschritt der Innenring zur mechanischen Verstärkung mit einem konzentrischen Aussenring versehen wird.

Insbesondere wird dabei so vorgegangen, dass im zweiten Teilschritt der Innenring mit von Epoxydharz getränkten Kohlefasermatten ummantelt wird, wobei die Kohlefasern hauptsächlich in Umfangsrichtung ausgerichtet sind, und dass der Kohlefaserverbund anschliessend unter Druck gebacken wird.

Damit trotz der Ringe die Kühlung der Erregerwicklung und des Rotorkörpers gewährleistet ist, ist es günstig, wenn die Ringe Mittel, insbesondere in Form von Öffnungen, zur Führung von Kühlluft aufweisen. Darüber hinaus können zwischen mehreren, in axialer Richtung hintereinander angeordneten Ringen Spalte zur Führung von Kühlluft vorgesehen sein.

Vorzugsweise werden der oder die Ringe nach dem Herstellen und vor dem Aufschieben auf den Rotor mechanisch bearbeitet und mit Mitteln zur Führung von Kühlluft versehen.

Eine andere Ausgestaltung der Synchronmaschine nach der Erfindung zeichnet sich dadurch aus, dass die Ringe so ausgelegt sind, dass Zuwächse des Rotordurchmessers im Betrieb, insbesondere durch Temperaturerhöhung und Fliehkräfte, toleriert werden. Vorzugsweise sitzen die Ringe praktisch spielfrei auf dem Rotor und sind durch geeignete Mittel gesichert, so dass die Ringe mitdrehen.

Eine weitere Ausgestaltung der Ringe zeichnet sich dadurch aus, dass am Innenring das "Composite-Shield"-Material in axialer Richtung geschlitzt ist, um mögliche Spannungen, verursacht durch Temperatur und Fliehkräfte im Betrieb, zu reduzieren.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: in zwei Teilfiguren 1 (a) und 1 (b) schematisch die Ausbildung des Statormagnetfelds ohne und mit wirksamem Rotordämpfersystem bei einer herkömmlichen Synchronmaschine;
- Fig. 2: in zwei Teilfiguren 2(a) und 2(b) schematisch die Ausbildung des Statormagnetfelds ohne und mit wirksamem Rotordämpfersystem bei einer Synchronmaschine gemäss einem Ausführungsbeispiel der Erfindung;
- Fig. 3: den Aufbau eines magnetisierbaren Rings für den Rotor gemäss einem anderen Ausführungsbeispiel der Erfindung;
- Fig. 4: einen vergrösserten Ausschnitt aus Fig. 3;
- Fig. 5: den Rotor eines grossen Turbogenerators mit mehreren in axialer Richtung hintereinander angeordneten magnetisierbaren Ringen gemäss einem weiteren Ausführungsbeispiel der Erfindung.

### WEGE ZUR AUSFÜHRUNG DER ERFINDUNG

In Fig. 2 ist die Wirkung der erfindungsgemässen Massnahme(n) in vereinfachter Form und im Vergleich zu Fig. 1 wiedergegeben: Der Rotor 12 der Synchronmaschine 10 wird von einem in den Luftspalt 26 hineinreichenden magnetisierbaren Mantel 15 umgeben, der vorzugsweise den Rotor 12 ringförmig umschliesst. Im stationären Betriebsfall ohne Feldoberwellen und ohne Unsymmetrie (Fig. 2(a)), wenn keine Dämpferströme induziert werden, geht das Statormagnetfeld 13 des Stators 11 in der aus Fig. 1(a) bekannten Weise durch den Rotor 12. Bei anderen Betriebs- bzw. Störfällen werden Dämpferströme 14 induziert (Fig. 2(b)), die das Statormagnetfeld 13 aus dem Rotor 12 verdrängen und es in tangentialer Richtung (Umfangsrichtung) überwiegend durch den magnetisierbaren Mantel 15 umlenken.

Der magnetisierbare Mantel 15 wird vorzugsweise aus einem sogenannten "Composite-Shield"-Material aufgebaut. "Composite-Shield"-Materialien sind Verbundstoffe, die aus feinen Eisenpartikeln bestehen, welche in Kunststoff eingebettet sind. Die Permeabilität der Eisenpartikel und deren Dichte bestimmen die Magnetisierbarkeit des Materials. Der Kunststoff wirkt als mechanische Trägersubstanz und zugleich als elektrische Isolation, sodass die resultierende elektrische Leitfähigkeit sehr gering ist. Diese Stoffe eignen sich somit ideal zum ,Umleiten' von magnetischen Wechselflüssen ohne Entstehung von Wirbelströmen und damit einhergehender Wärmeproduktion bzw. Temperaturerhöhung.

Das "Composite-Shield"-Material im magnetisierbaren Mantel bzw. Ring 15 vermindert den magnetischen Widerstand quer zum Luftspalt (also in tangentialer Richtung). Bei den oben erwähnten besonderen Betriebs- bzw. Störfällen entstehen Dämpferströme 14 im Rotor 12, die das Statormagnetfeld 13 quer zum Luftspalt 26 (tangential) umlenken. Der vom Stator 11 eingeprägte magnetische Fluss durchdringt dann den Mantel. Der notwendige Magnetisierungsstrom ist dabei kleiner als bei herkömmlicher Bauart ohne Mantel 15. Der notwendige Dämpferstrom 14 ist daher ebenfalls kleiner. Weil die elektrischen Verluste im Quadrat mit der Stromstärke einhergehen, ergibt sich eine überproportionale Minderung der Verluste im Rotor-Dämpfer.

Kurzeitig produzierte Wärme im Dämpfersystem, so wie sie bei instationären Vorgängen auftritt, führt wegen der Wirksamkeit von Wärmekapazitäten im allgemeinen zu einer unkritischen Temperaturüberhöhung. Hingegen ist die Wärmeproduktion anhaltend bei stationären Betriebsfällen mit unsymmetrischem Stator-Stromsystem und/oder höherer Statorstrom-Harmonischen. Die Wärmekapazitäten sind dann irrelevant für die stationär auftretende Temperatur. Hier ist der Einsatz der "Composite-Shield"-Materialien besonders wirkungsvoll, weil sie die Wärmeproduktion im Dämpfersystem verringern und damit die stationäre Betriebstemperatur absenken.

Der magnetisierbare Mantel 15 muss so ausgelegt sein, dass das von den Statorströmen erregte Arbeitsgrundfeld (stationäres Statormagnetfeld 13 in Fig. 2(a) ohne zeitliche oder räumliche Magnetfeld-Oberwellen und ohne Unsymmetrie) grösstenteils den Rotorkörper des Rotors 12 durchsetzt. Andernfalls ist der elektromagnetische Leistungsumsatz nicht gewährleistet. Der erhöhte Bedarf an Rotor-Erregerstrom ist dabei zu berücksichtigen.

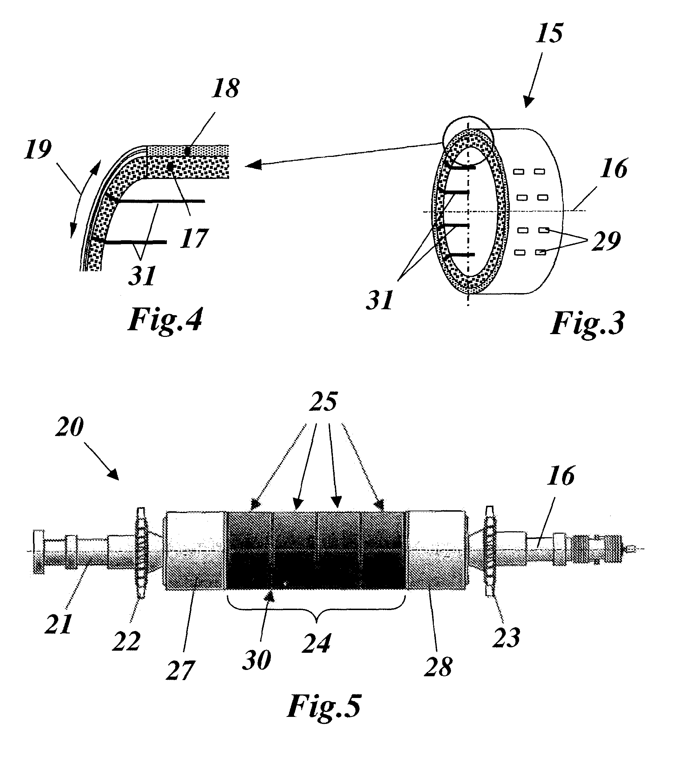

Eine mögliche Ausführungsform ist gemäss Fig. 3-5 wie folgt gegeben: Der Rotor 20 mit seiner Rotorwelle 21 und den an beiden Enden angeordneten Ventilatoren 22, 23 erstreckt sich entlang der Rotorachse 16. Das ,,Composite-Shield"-Material wird in Form von Ringen 15 bzw. 25 vorgefertigt und bei der Montage in axialer Richtung über den Rotor 20 aufgezogen. Die Ausführung mit mehreren Ringen 25 über die axiale Länge des Rotors 20 begünstigt eine Vereinfachung von Fertigung, Transport und Montage. Löcher und Schlitze 29 in den Ringen 15, 25 sowie Spalte 30 (in axialer Richtung) zwischen den Ringen 25 kann man zur Führung von Kühlluft nutzen. Die magnetisierbaren Rotorringe 15, 25 werden dabei vorzugsweise so ausgelegt, dass Zuwächse des Rotordurchmessers im Betrieb (durch Temperatur und Fliehkraft) toleriert sind.

Um das magnetische Schirm-Material gegen Fliehkräfte zu sichern, werden die magnetischen Ringe (wie in Fig. 3 und 4 dargestellt) mit zwei Materialien in zwei voneinander getrennten Schichten ausgeführt. Dadurch entsteht ein Innenring 17 aus magnetisierbarem "Composite-Shield"-Material (gesintert) und ein Aussenring 18 aus Kohlefasermaterial (gebacken).

Die Herstellung kann auf nachstehende Weise erfolgen: Der magnetisierbare Innenring 17 wird aus weichem magnetischem "Composite-Shield"-Material unter 1100°C für ca. eine Stunde gesintert. Das fertig gesinterte Innenring-Material ist dann bis 250°C Hitze beständig.

Im Anschluss daran wird der Innenring 17 mit Epoxydharz-getränkten Kohlefasermatten ummantelt, wobei die Fasern hauptsächlich in Umfangsrichtung (Faserrichtung 19 in Fig. 4) ausgerichtet sind. Der Kohlefaserverbund wird unter Druck bei ca. 170°C für 45 Minuten gebacken.

Der fertig gebackene Ring kann dann mechanisch bearbeitet werden, um die notwendigen Lüftungslöcher und Schlitze (29), zur Lüftung und Reduktion mechanischer Spannungen, anzubringen. Ebenso kann der Innenring 17 mit axialen Schlitzen 31 versehen werden, um die mechanischen Spannungen im Betrieb, insbesondere durch Temperaturerhöhung und Fliehkräfte, zu reduzieren.

Vor dem Aufziehen der Kappenringe 27, 28 auf den Rotor 20 werden die Ringe (Zylinder) 25 über den Rotorkörper geschoben, so dass sie den Aktivteil der Rotorwicklung 24 abdecken. Als Sicherung gegen Verdrehen können z.B. die Wuchtlöcher und Mittelzentrierungen konstruktiv so ausgearbeitet werden, um sie mit Zylinderstifte zu versehen.

Es ist alternativ zu dem oben beschriebenen Vorgehen aber auch denkbar, die Ringe 15 statisch im Stator 11 zu montieren.

### BEZUGSZEICHENLISTE

- 10: Synchronmaschine (Turbogenerator)
- 11: Stator
- 12: Rotor
- 13: Statormagnetfeld
- 14: Dämpferstrom
- 15: magnetisierbarer Mantel (Ring)
- 16: Rotorachse
- 17: Innenring (magn. Sintermaterial)
- 18: Aussenring (Kohlefaser)
- 19: Faserrichtung (Kohlefaser)
- 20: Rotor
- 21: Rotorwelle
- 22,23: Ventilator
- 24: Rotorwicklung (Aktivteil)
- 25: magnetisierbarer Ring
- 26: Luftspalt
- 27,28: Kappenring (zur Fliehkraftsicherung des Rotor-Wickelkopfes)
- 29: Schlitz
- 30: Spalt
- 31: Schlitz

## Patentansprüche

1. Synchronmaschine (10), insbesondere Turbogenerator, umfassend einen um eine Rotorachse (16) drehbaren Rotor (12, 20), welcher unter Ausbildung eines Luftspaltes (26) konzentrisch von einem Stator (11) umgeben und mit einem Rotor-Dämpfersystem (14) ausgestattet ist, **dadurch gekennzeichnet, dass** im Luftspalt (26) Mittel (15, 17, 18, 25) zur Beeinflussung des Statormagnetfeldes (13) angeordnet sind.

2. Synchronmaschine nach Anspruch 1, **dadurch gekennzeichnet, dass** die Mittel zur Beeinflussung des Statormagnetfeldes (13) einen magnetisierbaren Mantel (15) umfassen, der die vom Arbeitsgrundfeld der Maschine durchsetzte Oberfläche des Rotors (12, 20) zumindest teilweise bedeckt.

3. Synchronmaschine nach Anspruch 2, **dadurch gekennzeichnet, dass** der magnetisierbare Mantel (15) den Rotor (12, 20) in Form eines oder mehrerer magnetisierbarer Ringe (25) umschliesst.

4. Synchronmaschine nach Anspruch 3, **dadurch gekennzeichnet, dass** die magnetisierbaren Ringe (25) jeweils in konzentrischer Anordnung unmittelbar aneinander grenzend einen Innenring (17) und einen Aussenring (18) umfassen, dass der Innenring (17) magnetisierbares Material enthält, und dass der Aussenring (18) zur Sicherung des Innenrings (17) gegen die beim drehenden Rotor (12, 20) auftretenden Fliehkräfte ausgebildet ist.

5. Synchronmaschine nach Anspruch 4, **dadurch gekennzeichnet, dass** der Aussenring (18) aus einem faserverstärkten Verbundwerkstoff besteht.

6. Synchronmaschine nach Anspruch 5, **dadurch gekennzeichnet, dass** der Aussenring (18) zur Faserverstärkung Kohlefasern enthält, und dass die Kohlefasern in Umfangsrichtung (19) orientiert sind.

7. Synchronmaschine nach einem der Ansprüche 4 bis 6, **dadurch gekennzeichnet, dass** der Innenring (17) aus gesintertem Material, insbesondere aus sogenanntem "Composite-Shield"-Material, besteht.

8. Synchronmaschine nach einem der Ansprüche 3 bis 6, **dadurch gekennzeichnet, dass** die Ringe (15, 25) Mittel, insbesondere in Form von Öffnungen (29), zur Führung von Kühlluft aufweisen.

9. Synchronmaschine nach einem der Ansprüche 3 bis 6, **dadurch gekennzeichnet, dass** zwischen mehreren, in axialer Richtung hintereinander angeordneten Ringen (15, 25) Spalte (30) zur Führung von Kühlluft vorgesehen sind.

10. Synchronmaschine nach einem der Ansprüche 3 bis 6, **dadurch gekennzeichnet, dass** die Ringe (15, 25) so ausgelegt sind, dass Zuwächse des Rotordurchmessers im Betrieb, insbesondere durch Temperaturerhöhung und Fliehkräfte, toleriert werden.

11. Synchronmaschine nach Anspruch 10, **dadurch gekennzeichnet, dass** die Ringe (15, 25) praktisch spielfrei auf dem Rotor (12, 20) sitzen und durch geeignete Mittel gesichert sind, so dass die Ringe mitdrehen.

12. Synchronmaschine nach Anspruch 7, **dadurch gekennzeichnet, dass** am Innenring (17) das "Composite-Shield"-Material in axialer Richtung mit Schlitzen (31) versehen ist, um mögliche Spannungen, verursacht durch Temperatur und Fliehkräfte im Betrieb, zu reduzieren.

13. Verfahren zum Herstellen einer Synchronmaschine nach einem der Ansprüche 3 bis 12, **dadurch gekennzeichnet, dass** in einem ersten Schritt der oder die Ringe (15, 25) hergestellt werden, und dass in einem zweiten Schritt die fertigen Ringe (15, 25) über den Rotor (12, 20) geschoben werden.

14. Verfahren nach Anspruch 13, **dadurch gekennzeichnet, dass** bei der Herstellung eines Rings (15, 25) zunächst in einem ersten Teilschritt ein Innenring (17) aus magnetisierbarem Material, insbesondere durch Sintern eines sogenannten "Composite-Shield"-Materials, hergestellt wird, und dass in einem zweiten Teilschritt der Innenring (17) zur mechanischen Verstärkung mit einem konzentrischen Aussenring (18) versehen wird.

15. Verfahren nach Anspruch 14, **dadurch gekennzeichnet, dass** im zweiten Teilschritt der Innenring (17) mit von Epoxydharz getränkten Kohlefasermatten ummantelt wird, wobei die Kohlefasern hauptsächlich in Umfangsrichtung (19) ausgerichtet sind, und dass der Kohlefaserverbund anschliessend unter Druck gebacken wird.

16. Verfahren nach einem der Ansprüche 13 bis 15, **dadurch gekennzeichnet, dass** der oder die Ringe (15, 25) nach dem Herstellen und vor dem Aufschieben auf den Rotor (12, 20) mechanisch bearbeitet und mit Mitteln (29) zur Führung von Kühlluft versehen werden.

17. Verfahren nach einem der Ansprüche 13 bis 16, **dadurch gekennzeichnet, dass** nach dem Aufschieben der Ringe (15, 25) auf den Rotor (12, 20) Kappenringe (27, 28) aufgezogen werden.
